# EUROPÄISCHE PATENTSCHRIFT

(11) **EP 4 208 696 B1**
(45) Veröffentlichungstag und Bekanntmachung des Hinweises auf die Patenterteilung: **01.10.2025**
(21) Anmeldenummer: 21763058.1
(22) Anmeldetag: 16.08.2021
(51) Int. Cl.: G01F 1/84, G01N 9/32, G01N 11/02, G01F 25/00, G01P 5/14, G01F 1/34, G01N 11/16, G01N 9/00

(54) **VERFAHREN ZUM BETREIBEN EINER MESSANORDNUNG MIT EINEM CORIOLIS-MESSGERÄT UND MESSANORDNUNG**
METHOD FOR OPERATING A MEASURING ASSEMBLY COMPRISING A CORIOLIS METER, AND MEASURING ASSEMBLY
PROCÉDÉ DE FONCTIONNEMENT D'UN ENSEMBLE DE MESURE COMPRENANT UN DÉBITMÈTRE DE CORIOLIS ET ENSEMBLE DE MESURE

(30) Priorität: 04.09.2020 DE 102020123162
(43) Veröffentlichungstag der Anmeldung: 12.07.2023
(73) Patentinhaber: Endress+Hauser Flowtec AG, 4153 Reinach (CH)
(72) Erfinder: TSCHABOLD, Peter, 4226 Breitenbach (CH); ZHU, Hao, 85354 Freising (DE); LIN, Yaoying, 85356 Freising (DE)
(74) Vertreter: Endress + Hauser Group Services (Deutschland) AG+Co. KG
(86) Internationale Anmeldenummer: PCT/EP2021/072672
(87) Internationale Veröffentlichungsnummer: WO 2022/048890

(56) Entgegenhaltungen:
- WO-A1-2019/032098
- CA-A1- 2 658 810
- DE-A1- 102017 131 199
- US-A1- 2011 029 259
- US-A1- 2013 228 003
- US-B2- 8 374 805

## Beschreibung

Die Erfindung betrifft ein Verfahren zum Betreiben einer Messanordnung mit einem Coriolis-Messgerät, welches Coriolis-Messgerät zum Erfassen eines Massedurchflusses und/oder einer Dichte und/oder einer Viskosität eines Mediums eingerichtet ist. Ferner betrifft die Erfindung eine Messanordnung mit einem derartigen Coriolis-Messgerät.

Bei Coriolis-Messgeräten wird zumindest ein zum Führen eines Mediums eingerichtetes Messrohr mittels eines Erregers zu Messrohrschwingungen angeregt. Das Messrohr weist hierfür einen Ein- und Auslauf zum Ein- bzw. Ausströmen des Mediums auf. Zur näheren Erläuterung des zugrunde liegenden Messprinzips eines Coriolis-Messgeräts sei auf entsprechende Veröffentlichungen des Stands der Technik verwiesen, beispielsweise auf die WO 2019/032098 A1, DE 10 2015 120 087 A1, DE 10 2014 119 427 A1, die 10 2011 006 971 A1, die DE 10 2011 006 919 A1, die DE 10 2016 125 537 A1 die US 2013/0319134 A1, die US 8,281,668 B2 oder die US 6,415,668 B1.

Die Messrohrschwingungen werden dabei üblicherweise von einer Sensoranordnung mit einem einlaufseitigen ersten Sensor und einen auslaufseitigen zweiten Sensor erfasst und anschließend von einer elektronischen Betriebsschaltung ausgewertet. Die Betriebsschaltung erfasst an dem ersten Sensor und dem zweiten Sensorjeweils induzierte elektrische Messspannungen und ermittelt anhand der erfassten Messspannungen einen den Massedurchflusses und/oder die Dichte und/oder die Viskosität repräsentierenden Messwert.

Aufgrund von Fertigungsschwankungen sind die beiden Sensoren messtechnisch sehr häufig leicht asymmetrisch. Diese Asymmetrie kann bspw. mittels einer initialen Kalibrierung des Messgeräts bestimmt werden. Dies ermöglicht, die bestimmte Asymmetrie in einem späteren Messbetrieb zu berücksichtigen und/oder zu korrigieren. Hierbei wird bspw. ein hinterlegter Referenz-Wertes für den Asymmetrie-Wert gewonnen und anschließend, bspw. in einer Speichereinheit der Betriebsschaltung, hinterlegt.

Der Erfindung liegt die Aufgabe zugrunde, die Genauigkeit einer Messanordnung mit einem Coriolis-Messgerät zu erhöhen.

Die Aufgabe wird gelöst durch ein Verfahren nach Anspruch 1 zum Betreiben einer Messanordnung mit einem Coriolis-Messgerät und eine Messanordnung nach Anspruch 8.

Bezüglich des Verfahrens wird die Aufgabe gelöst durch ein Verfahren zum Betreiben einer Messanordnung mit einem Coriolis-Messgerät, welches Coriolis-Messgerät zum Erfassen eines Massedurchflusses und/oder einer Dichte und/oder einer Viskosität eines durch mindestens ein Messrohr des Coriolis-Messgeräts strömenden Mediums eingerichtet ist,
das Coriolis-Messgerät umfassend:
- das mindestens eine Messrohr, welches zum Führen des Mediums eingerichtet ist, mit jeweils einem Einlauf zum Einströmen des Mediums und einem Auslauf zum Ausströmen des Mediums;
- mindestens einen Erreger, welcher dazu eingerichtet ist, das mindestens eine Messrohr zu Messrohrschwingungen anzuregen;
- eine Sensoranordnung, welche dazu eingerichtet sind, die Messrohrschwingungen zu erfassen, mit einem einlaufseitigen ersten Sensor und einen auslaufseitigen zweiten Sensor;
- eine Betriebsschaltung, welche dazu eingerichtet ist, den zumindest einen Erreger zu betreiben, an dem ersten Sensor und dem zweiten Sensor jeweils induzierte elektrische Messspannungen zu erfassen, und anhand der erfassten Messspannungen einen den Massedurchflusses und/oder die Dichte und/oder die Viskosität repräsentierenden Messwert zu ermitteln,
wobei das Verfahren die folgenden Schritte umfasst:
- Aufnehmen der ersten Messspannung und der zweiten Messspannung, sowie Erstellen eines Asymmetrie-Werts (AW) als Maß für eine Asymmetrie zwischen dem ersten Sensor und dem zweiten Sensor, insb. zwischen einer Amplitude der ersten Messspannung und einer Amplitude der zweiten Messspannung;
- Auslesen eines hinterlegten Referenz-Wertes (RW) für den Asymmetrie-Wert (AW),
- Vergleich des erstellten Asymmetrie-Wertes (AW) mit dem hinterlegten Referenz-Wert (RW),
- wobei der Asymmetrie-Wert während des Messbetriebs wiederkehrend erstell und mit dem Referenz-Wert verglichen wird.

Das erfindungsgemäße Verfahren ist durch den folgenden Schritt gekennzeichnet:
- Wiederkehrendes Erfassen einer von der Amplitude der Messspannung verschiedenen Schwingungsmessgröße der Messrohrschwingungen, insb. einer Resonanzfrequenz, einer Phasenverschiebung und/oder einer Abklingrate der Messrohrschwingungen; und
- Detektion einer bei einer Asymmetrie zwischen dem ersten Sensor und dem zweiten Sensor vorliegenden Teilfüllung des Messrohrs mit einem im Messrohr stehenden Medium, für den Fall, dass zumindest eine Asymmetrie-Wertfolge von wiederkehrend erfassten Asymmetrie-Werten um mindestens einen vorgegeben Grenzwert, von dem Referenz-Wert abweicht, und die Schwingungsmessgröße oder eine daraus abgeleitete Messgröße im Wesentlichen konstant ist oder maximal um einen vorgegebenen Betrag um einen konstanten Wert schwankt.

Einlaufseitig/auslaufseitig bedeutet hier, dass die Sensoren in oder an einem einlauf- /auslaufseitigen Abschnitt des Messrohrs angeordnet sind.

Als Asymmetrie-Wert AW wird oftmals eine dimensionslose, relative Größe verwendet. Bspw. ein Verhältnis einer Abweichung der Amplituden AU1, AU2 der Messspannungen U1, U2 zu einem Mittelwert der Amplituden der Messspannungen gebildet: AW = (AU1-AU2)/ [(AU1+AU2)/2].

Bei dem "hinterlegten Referenz-Wert" handelt es sich bspw. nicht um einen Referenz-Wert, der aus einer während eines Messbetriebs gewonnen Wertefolge für den Asymmetrie-Wert gebildet wird. Der Referenz-Wert wird insbesondere nicht selbst im Messbetrieb erstellt und hinterlegt.

Für den Fall, dass während eines Messbetriebs der Asymmetrie-Wert von dem hinterlegten Referenz-Wert abweicht, wird ein ungewünschter Zustand bzw. Fehlerzustand des Coriolis-Messgeräts detektiert. Damit können bspw. die in diesen Fehlerzustand erfassten Messwerte speziell gekennzeichnet und/oder verworfen werden. Dies erhöht letztendlich die Genauigkeit eines ermittelten Messwerts für den Massedurchfluss mit einer Messanordnung umfassend ein Coriolis-Messgerät, was bspw. in Lösungen wie dem Bunkering von Bedeutung ist.

Im Rahmen der Erfindung wird der Asymmetrie-Wert während des Messbetriebs wiederkehrend erstellt und mit dem Referenz-Wert verglichen.

Erfindungsgemäß werden vorteilhaft falsch-positive Meldungen über die Teilfüllung des Messrohrs ausgeschlossen. Die Asymmetrie kann auch durch andere Dinge, z.B. Inhomogenitäten im Medium, etwa ein mehrphasiges Medium mit Gasblasen, verursacht werden. In diesem Fall würde sich aber nicht nur der Asymmetrie-Wert, sondern auch die Schwingungsmessgröße, stark, bspw. sprunghaft, ändern. Bei der Schwingungsmessgröße handelt es sich bspw. um eine Resonanzfrequenz, Phasenverschiebung und/oder eine Abklingrate der erfassten Messrohrschwingung oder eine weitere, aus dem Stand der Technik bekannte Schwingungsmessgröße.

In einer Ausgestaltung der Erfindung umfasst das Verfahren den Schritt:
Detektion einer bei einer Asymmetrie zwischen dem ersten Sensor und dem zweiten Sensor vorliegenden Teilfüllung des Messrohrs mit einem im Messrohr stehenden Medium, für den Fall, dass zumindest der Asymmetrie-Wert um mindestens einen vorgegeben Grenzwert, von dem Referenz-Wert abweicht.

Insbesondere wird anschließend zur Detektion der Teilfüllung auch eine Meldung bezüglich der Teilfüllung ausgegeben. Die Abweichung des Asymmetrie-Werts vom Referenz-Wert stellt also ein notwendiges Kriterium für die Detektion der Teilfüllung dar.

Der vorgegebene Grenzwert beträgt bspw. zumindest 0,5 %, insbesondere zumindest 2%. Hierbei handelt es sich um einen absoluten Wert, d.h. GW = |RW-AW|. Dies, da der Asymmetrie-Wert üblicherweise eine dimensionslose, relative Größe wie bspw. AW= (AU1-AU2)/ [(AU1+AU2)/2] ist.

In einer Ausgestaltung der Erfindung wird der Referenz-Wert für den Asymmetrie-Wert im Rahmen eines Initialisierungsbetriebs des in einer Rohrleitung einer Prozessanlage eingebauten Coriolis-Messgeräts erstellt oder zumindest angepasst.

In einem eingebauten Zustand wird im Rahmen der Initialisierung also ein gerätespezifischer (d.h. ein für das jeweilige, in einer Prozessanlage eingebaute Coriolis-Messgerät spezifischer) Referenz-Wert für den Asymmetrie-Wert des Coriolis-Messgeräts ermittelt und hinterlegt.

Der hinterlegte Referenz-Wert sollte sich hierbei in einem prinzipiell tolerierbaren Rahmen bewegen. Für den Fall eines zu großen Asymmetrie-Werts (bspw. größer als 15% für das vorstehend genannte Verhältnis der Abweichung der Messspannungen bezogen auf den Mittelwert) wird das Coriolis-Messgerät als prinzipiell mit Produktionsfehlern behaftet erkannt.

In einer Ausgestaltung der Erfindung umfasst die Messanordnung:
- eine Rohrleitung, mit der das Coriolis-Messgerät derart verbunden ist, dass mit dem Coriolis-Messgerät der Massedurchfluss eines durch die Rohrleitung strömenden Mediums bestimmbar ist;
- einen ersten Drucksensor, welcher in oder an einem einlaufseitigen Abschnitt der Rohrleitung angebracht ist und einen zweiten Drucksensor, welcher in oder an einem auslaufseitigen Abschnitt der Rohrleitung angebracht ist und/oder ein Differenzdrucksensor, welcher dazu eingerichtet ist, einen Druckunterschied zwischen einem einlaufseitigen Abschnitt der Rohrleitung und einem auslaufseitigen Abschnitt der Rohrleitung zu erfassen,
wobei das Verfahren umfasst:
- Messen eines bei einem Druckunterschied zwischen dem einlaufseitigen Abschnitt der Rohrleitung und dem auslaufseitigen Abschnitt der Rohrleitung vorliegenden Differenzdrucks mittels des ersten Drucksensors und des zweiten Drucksensors und/oder des Differenzdrucksensors;
- Bestimmen einer Durchflussgeschwindigkeit des Mediums durch die Rohrleitung auf Basis der Differenzdruckmessung;
- Verwerfen der bestimmten Durchflussgeschwindigkeit per Differenzdruckmessung, für den Fall, dass eine Teilfüllung des Messrohrs mit einem im Messrohr stehenden Medium detektiert wird.

Für mehr Details der Messanordnung dieser Ausgestaltung sei auf die zum Zeitpunkt der Einreichung dieser Patentanmeldung noch unveröffentlichte Patentanmeldung mit der Anmeldnummer 102019125682.8 verwiesen.

Eine Teilfüllung verursacht auch einen Differenzdruck. Somit ist in diesem Fall das Bestimmen einer Durchflussgeschwindigkeit auf Basis der Differenzdruckmessung nicht mehr zuverlässig. Die auf Basis der Differenzdruckmessung bestimmte Durchflussgeschwindigkeit wird daher bei Detektion der Teilfüllung verworfen.

In einer Ausgestaltung der Erfindung umfasst das Verfahren den Schritt:
- Vorgabe eines minimalen Differenzdrucks;
- Verwerfen der bestimmten Durchflussgeschwindigkeit per Differenzdruckmessung, falls der gemessene Differenzdruck kleiner als der minimale Differenzdruck ist;
wobei der minimale Differenzdruck in derart gewählt ist, dass er maximal 2/3, insb. maximal 1/2, mal so groß ist im Vergleich zu einem hydrostatischen Druck, welcher hydrostatische Druck bei einer vollständigen Füllung des Messrohrs mit einem Medium vorliegt.

Der hydrostatische Druck hängt z.B. von einer Messrohrgeometrie und/oder einer Einbaulage des Coriolis-Messgeräts (z.B. vertikal, horizontal, oder dazwischen) ab. Im Allgemeinen kann bei einem stehenden Medium ein hydrostatischer Druck des Mediums (d.h. bei einer Durchflussgeschwindigkeit von im Wesentlichen Null) zu einem Differenzdruck beitragen. Aus diesem Grund wird ein minimaler Differenzdruck verwendet: Ist der gemessene Differenzdruck kleiner als der minimale Differenzdruck, kann nicht mehr ausgeschlossen werden dass der bestimmte Differenzdruck im Wesentlichen nur durch einen hydrostatischen Druck eines im Messrohr stehenden Mediums verursacht wird. In diesem Fall wird die Bestimmung der Durchflussgeschwindigkeit auf Basis der Differenzdruckmessung verworfen.

Dadurch, dass nun die mittels Differenzdruckmessung auch bereits bei Detektion einer Teilfüllung verworfen wird, kann bevorzugt der als Grenzwert dienende minimale Differenzdruck entsprechend verkleinert werden. Er ist in dieser Ausgestaltung nun bevorzugt kleiner als ein hydrostatischer Druck, welcher hydrostatische Druck bei einer vollständigen Füllung des Messrohrs mit einem Medium vorliegt. Dadurch können- falls keine Teilfüllung detektiert wird- letztendlich kleinere Durchflussgeschwindigkeiten bestimmt werden und somit vorteilhaft die Verfügbarkeit der Messandordnung auf Bereiche kleinerer Durchflussgeschwindigkeiten erweitert werden. Es wird also eine erhöhte Verfügbarkeit der Messanordnung erreicht.

In einer Ausgestaltung der Erfindung umfasst das Verfahren den Schritt:
- Verwerfen eines mit dem Coriolis-Messgerät ermittelten Messwerts für den Massedurchfluss für den Fall, dass eine Teilfüllung des Messrohrs detektiert wird.

In einer Ausgestaltung der Erfindung umfasst das Verfahren den Schritt:
- Ausgabe eines Messwerts von Null für den Massedurchfluss für den Fall, dass eine Teilfüllung des Messrohrs detektiert wird.

Bezüglich der Messanordnung wird die Aufgabe gelöst durch eine Messanordnung mit einem Coriolis-Messgerät, welches Coriolis-Messgerät zum Erfassen eines Massedurchflusses und/oder einer Dichte und/oder einer Viskosität eines durch mindestens ein Messrohr des Coriolis-Messgeräts strömenden Mediums eingerichtet ist, das Coriolis-Messgerät umfassend:
- das mindestens eine Messrohr, welches zum Führen des Mediums eingerichtet ist, mit jeweils einem Einlauf zum Einströmen des Mediums und einem Auslauf zum Ausströmen des Mediums;
- mindestens einen Erreger, welcher dazu eingerichtet ist, das mindestens eine Messrohr zu Messrohrschwingungen anzuregen;
- eine Sensoranordnung, welche dazu eingerichtet sind, die Messrohrschwingungen zu erfassen, mit einem einlaufseitigen ersten Sensor und einen auslaufseitigen zweiten Sensor;
- eine Betriebsschaltung, welche dazu eingerichtet ist, den zumindest einen Erreger zu betreiben, an dem ersten Sensor und dem zweiten Sensor jeweils induzierte elektrische Messspannungen zu erfassen, und anhand der erfassten Messspannungen einen den Massedurchflusses und/oder die Dichte und/oder die Viskosität repräsentierenden Messwert zu ermitteln,
wobei die Messanordnung dazu ausgestaltet ist, das erfindungsgemäße Verfahren nach zumindest einem der Ansprüche durchzuführen.

Die Messanordnung führt das Verfahren allein oder in Kombination mit einer übergeordneten Einheit, an die das Coriolis-Messgerät, insb. seine Betriebsschaltung, mittels einer Kommunikationsverbindung angeschlossen ist, aus.

In einer Ausgestaltung umfasst die Messanordnung daher eine übergeordnete Einheit, an die das Coriolis-Messgerät mittels einer Kommunikationsverbindung angeschlossen ist.

Bei der übergeordneten Einheit handelt es sich bspw. um eine übergeordnete Steuerungseinheit, bspw. ein Prozessleitsystem mit einem Rechner oder um eine speicherprogrammierte Steuerungseinheit (SPS).

Bei der Kommunikationsverbindung handelt es sich bspw. um eine drahtgebundene Kommunikationsverbindung bspw. um eine analoge Messübertragungsstrecke, insb. nach dem 4-20mA Standard, oder um einen drahtgebundenen Feldbus der Automatisierungstechnik, bspw. Foundation Fieldbus, Profibus PA, Profibus DP, HART, CANBus. Es kann sich aber auch um eine Kommunikationsverbindung eines modernen industriellen Kommunikationsnetzwerks, bspw. einen "Industrial Ethernet"-Feldbus, insbesondere Profinet, HART-IP oder Ethernet/IP oder eines aus dem Kommunikationsbereich bekanntes Kommunikationsnetzwerk, bspw. Ethernet nach dem TCP/IP-Protokoll, handeln.

Für den Fall, dass die Kommunikationsverbindung drahtlos ist, kann es sich zum Beispiel um ein Bluetooth, ZigBee-, WLAN-, GSM-, LTE-, UMTS-Kommunikationsnetzwerk oder aber auch eine drahtlose Version eines Feldbusses, insbesondere 802.15.4 basierte Standards wie WirelessHART handeln.

Die Erfindung wird anhand der nachfolgenden, nicht maßstabsgetreuen Figuren näher erläutert, wobei gleiche Bezugszeichen gleiche Merkmale bezeichnen. Wenn es die Übersichtlichkeit erfordert oder es anderweitig sinnvoll erscheint, wird auf bereits erwähnte Bezugszeichen in nachfolgenden Figuren verzichtet. Es zeigt:
Fig. 1: Eine in dem erfindungsgemäßen Verfahren eingesetzte Messanordnung;
Fig. 2. Ein Flussdiagramm einer Ausgestaltung des erfindungsgemäßen Verfahrens;
Fig. 3a, 3b: Untersuchungen der Anmelderin an einer Ausgestaltung der erfindungsgemäßen Messanordnung.

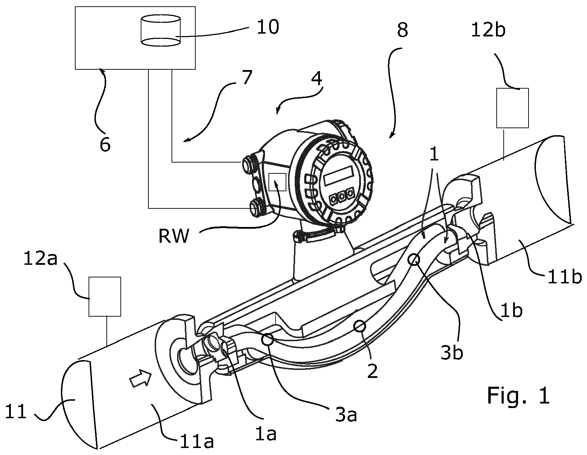

Fig. 1 zeigt ein aus dem Stand der Technik bekanntes Messsystem umfassend ein Coriolis-Messgerät 8 mit einem Messrohr 1 mit einem Einlauf 1a und einem Auslauf 1b zum Ein- bzw. Ausströmen eines Fluids. Das Messrohr 1 ist mittels eines Erregers zu Messrohrschwingungen anregbar. Die Messrohrschwingungen werden mittels einer Sensoranordnung 3 umfassend einen einlaufseitigen ersten Sensor 3a und einen auslaufseitigen zweiten Sensor 3b erfasst. Eine Betriebsschaltung 4 ist zum Regeln der Messrohrschwingungen und zum Auswerten der erfassten Messrohrschwingungen eingerichtet. Die Betriebsschaltung 4 umfasst hierfür bspw. eine in einem Transmittergehäuse angeordnete Schaltungsanordnung. Anhand der Messrohrschwingungen ist ein Messwert für den Massedurchfluss Phi ermittelbar.

Je nach Ausgestaltung der Messanordnung ist das Messrohr 1 des Coriolis-Messgeräts 8 an eine Rohrleitung 11 angeschlossen, wobei an einem einlaufseitigen Abschnitt 11a ein erster Drucksensor 12a und an einem auslaufseitigen Abschnitt 11b ein zweiter Drucksensor 12b angeordnet ist. Auf Basis eines mit den Drucksensoren 12a,12b ermittelten Differenzdrucks deltap ist eine Durchflussgeschwindigkeit v bestimmbar. Je nach Situation ist es vorteilhaft (siehe hierzu die eingangs erwähnte 102019125682.8), zusätzlich oder alternativ zum Messwert für den Massedurchfluss Phi, einen Messwert für die Durchflussgeschwindigkeit v auf Basis des Differenzdrucks deltap zu ermitteln.

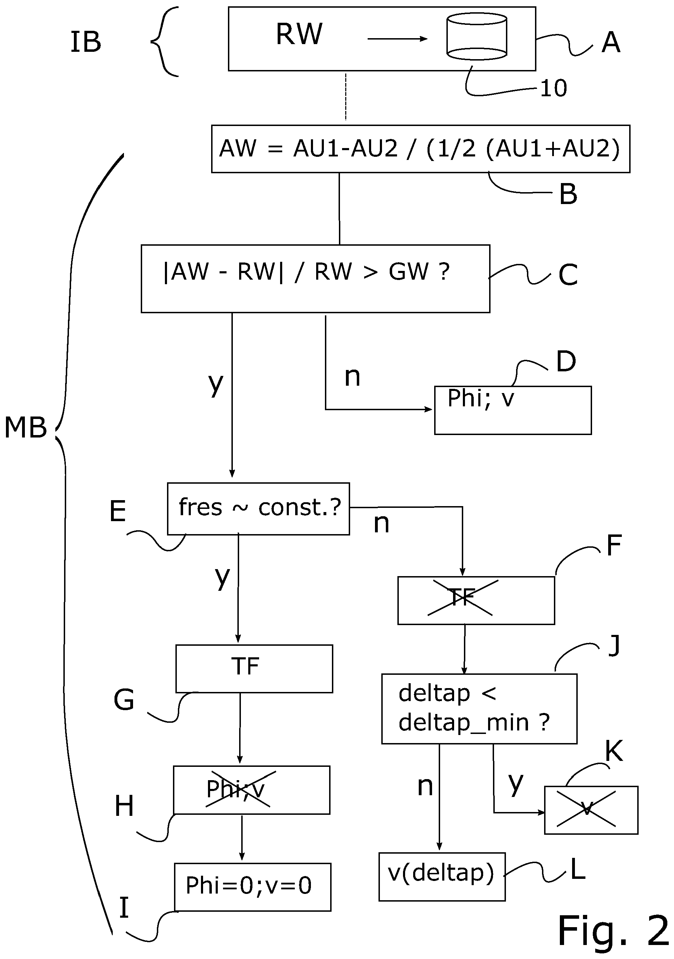

Gemäß dem Verfahren nach der Erfindung wird, bevorzugt in einem Messbetrieb MB, ein Asymmetrie-Wert AW erstellt, siehe hierzu auch Schritt B in Fig. 2. Der Asymmetrie-Wert AW ist bspw. ein Verhältnis aus einer Abweichung der Amplituden AU1, AU2 der Messspannungen U1, U2 zu einem Mittelwert der Amplituden der Messspannungen: AW = (AU1-AU2)/[(AU1+AU2)/2].

Dieser Asymmetrie-Wert AW wird anschließend mit einem hinterlegten Referenz-Wert RW für den Asymmetrie-Wert AW verglichen. Bevorzugt wird (Schritt A in Fig. 2) der Referenz-Wert RW im Rahmen eines Initialisierungsbetrieb IB, gerätespezifisch für das spezielle, eingebaute Coriolis-Messgerät 8 erstellt und in einer Speichereinheit 10 hinterlegt.

Bei dem Vergleich wird bspw. überprüft, ob eine, bspw. relative, Abweichung zwischen dem Asymmetrie-Wert AW und dem Referenz-Wert RW mindestens einen vorgegeben Grenzwert GW übersteigt. Für die Erfindung ist unwesentlich, ob eine relative oder eine absolute Abweichung zwischen Asymmetrie-Wert AW und Referenz-Wert RW betrachtet wird.

Übersteigt die Abweichung nicht den Grenzwert GW (Pfeil "n" zu Schritt D in Fig. 2), liegt keine Abweichung zwischen dem Asymmetrie-Wert AW und dem im Initialisierungsbetrieb IB ermittelten Referenz-Wert RW vor. In diesem Fall liegt also kein (potentieller) Fehlerzustand vor. Es wird ein Messwert für den Massedurchfluss Phi und die Durchflussgeschwindigkeit v ermittelt. Ggf. kann noch eine entsprechende Gutmeldung erzeugt werden, bspw. "Asymmetrie-Wert AW weicht nicht ab" und diese bspw. an einer Anzeigeeinheit (siehe Fig. 1) des Coriolis-Messgeräts 8 angezeigt oder in der übergeordneten Einheit 6 ausgegeben werden.

Liegt hingegen eine Abweichung vor (Pfeil "y" zu Schritt E in Fig. 2), wird als nächstes überprüft, ob eine Schwingungsmessgröße Smess maximal um einen vorgegebenen Betrag um einen konstanten Wert schwankt. In diesem Ausführungsbeispiel wird als Schwingungsmessgröße Smess die Resonanzfrequenz fres verwendet. "Maximal um einen vorgegebenen Betrag um einen konstanten Wert schwankt" bedeutet, dass die Resonanzfrequenz fres sich in einem erwartbaren Rahmen bewegt, bspw. innerhalb einer Größenordnung (d.h. ein Faktor 10) schwankt, und nicht, gleichzeitig zum Vorliegen der Abweichung des Asymmetrie-Wert AW vom Referenz-Wert RW, um mehr als eine Größenordnung um einen konstanten Wert schwankt.

Selbstverständlich lassen sich auch alternative oder weitere, aus dem Stand der Technik bekannte Schwingungsmessgrößen Smess verwenden.

Schwankt die Schwingungsmessgröße Smess nicht maximal um den vorgegebenen Betrag, liegt keine Teilfüllung TF vor (Pfeil "n" zu Schritt F in Fig. 2). Es kann eine entsprechende Gutmeldung erzeugt, bspw. "keine Teilfüllung TF" und diese wie vorstehend erwähnt erzeugt, angezeigt und/oder ausgegeben werden.

Schwankt die Schwingungsmessgröße Smess maximal um den vorgegebenen Betrag, liegt eine Teilfüllung TF vor (Pfeil "y" zu Schritt G in Fig. 2). Auch hier kann entsprechend eine Meldung "Teilfüllung TF liegt vor" erzeugt, angezeigt und/oder ausgegeben werden.

Anschließend wird (Schritt F in Fig. 2) insb. auch der ermittelte Messwert für den Massedurchfluss Phi und/oder die Durchflussgeschwindigkeit v verworfen.

Bei der Detektion der Teilfüllung TF mit einem im Messrohr 1 stehenden Medium liegt tatsächlich ein Massedurchfluss Phi und/oder eine Durchflussgeschwindigkeit von Null vor. Daher kann (Schritt G in Fig. 2) anschließend eine entsprechende Meldung erzeugt, angezeigt und/oder ausgegeben werden.

Für den Fall, dass die Messanordnung zur Bestimmung des Differenzdrucks deltap eingerichtet ist (bspw. da sie die in Fig. 1 gezeigten Drucksensoren 12,12a,12b umfasst), kann anschließend zu der Detektion des Vorliegens keiner Teilfüllung TF in Schritt F noch überprüft werden, ob der Differenzdruck deltap kleiner als ein minimaler Differenzdruck deltap_min ist (Schritt J in Fig. 2). Falls dies der Fall ist, wird die per Differenzdruck deltap bestimmte Durchflussgeschwindigkeit v verworfen (Pfeil y zu K in Fig. 2).

Ist hingegen der Differenzdruck deltap nicht kleiner als der minimale Differenzdruck deltap_min (Pfeil n zu L in Fig. 2), kann die per Differenzdruck deltap bestimmte Durchflussgeschwindigkeit v verwendet werden. Dadurch, dass in dem erfindungsgemäßen Verfahren die Teilfüllung TF verlässlich und sicher detektierbar ist, kann bevorzugt der minimale Differenzdruck deltap_min kleiner als ein hydrostatischer Druck hydrop gewählt werden.

Der hydrostatische Druck hydrop ist gleich demjenigen Druck, welcher bei einer vollständigen Füllung des Messrohrs 1 mit einem Medium vorliegt. Der hydrostatische Druck hydrop ist i.A. abhängig von der speziellen Ausgestaltung des Messrohrs 1 des Coriolis-Messgeräts 8 und/oder seiner Einbaulage. Bevorzugt ist der minimale Differenzdruck deltap_min zumindest kleiner als 2/3, besonders bevorzugt kleiner als ½ des jeweilig vorliegenden hydrostatischen Drucks hydrop.

Durch die sichere Detektion der Teilfüllung TF kann daher ein kleinerer minimaler Differenzdruck deltap_min verwendet werden. Dies erhöht die Verfügbarkeit der erfindungsgemäßen Messanordnung, im Vergleich zu einer Messanordnung, bei der minimale Differenzdruck deltap_min zumindest so groß wie der hydrostatische Druck hydrop ist. Es sind nun noch kleinere Durchflussgeschwindigkeiten v bestimmbar.

Das erfindungsgemäße Verfahren wird in dem hier gezeigten Ausführungsbeispiel durch das Coriolis-Messgerät 8 in Kombination mit einer übergeordneten Einheit 6, etwa einen Rechner in einer Leitwarte, an die das Coriolis-Messgerät 8 mittels einer Kommunikationsverbindung 7 angeschlossen ist, ausgeführt, siehe wieder Fig. 1. Hierfür umfasst die übergeordnete Einheit 6 bspw. eine Speichereinheit 10. Die genaue Art der übergeordneten Einheit 6 und der Kommunikationsverbindung 7 ist dabei für die Erfindung unwesentlich; es sei hierbei auf die vorstehend erwähnten Beispiele verwiesen.

Selbstverständlich kann das Verfahren auch vollständig durch das Coriolis-Messgerät 8 selbst ausgeführt sein, etwa indem es in dafür ausgelegte Komponenten seiner Betriebsschaltung 4 entsprechend implementiert ist. Hierfür umfasst die Betriebsschaltung 4 bspw. selbst eine Speichereinheit 10 (nicht dargestellt), in welcher der Referenz-Wert RW hinterlegt ist. Bspw. umfasst die Betriebsschaltung 4 hierfür einen Mikroprozessor oder andere zur Ausführung des Verfahrens eingerichtete elektronische Bauelemente bzw. Schaltungsanordnungen.

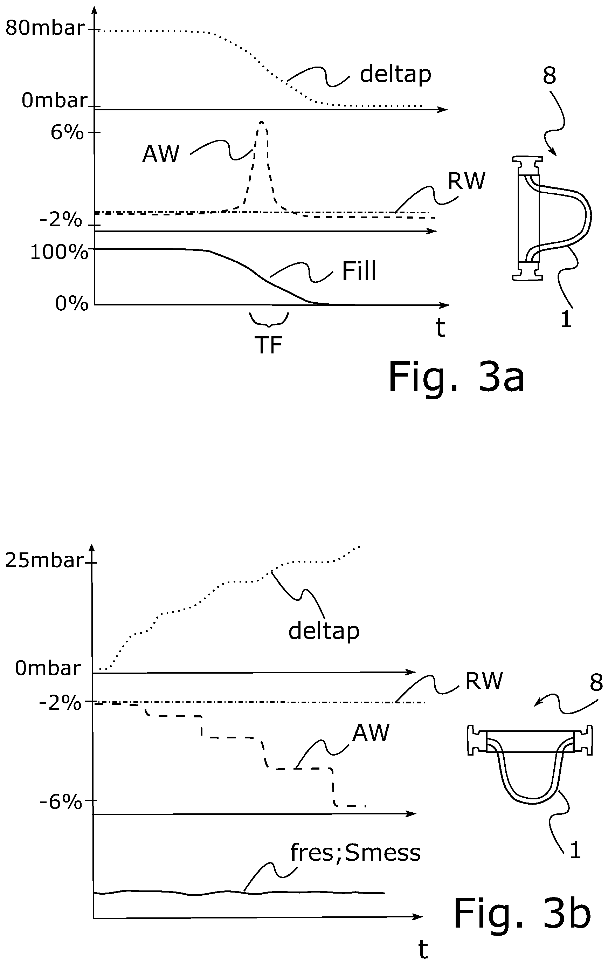

Fig. 3a, b zeigen Untersuchungen der Anmelderin, mittels derer das erfindungsgemäße Verfahren näher erläutert wird.

In Fig. 3a ist jeweils ein zeitlicher Verlauf eines Füllgrads Fill (unterer Graph, durchgezogene Linie), ein Asymmetrie-Wert AW (mittlerer Graph, gestrichelte Linie) und ein Differenzdruck deltap (oberer Graph, gepunktete Linie) dargestellt.

In den Untersuchungen der Anmelderin wird das Messrohr 1 eines vertikal angeordneten Coriolis-Messgeräts 8, ausgehend von einer vollständigen Füllung (Füllgrad Fill 100%) allmählich entleert. Gleichzeitig wird der Asymmetrie-Wert AW aufgezeichnet und mit dem anfangs ermittelten, für das eingebaute Coriolis-Messgerät 8 spezifischen Referenz-Wert RW verglichen (gestrichelt-gepunktete Linie). Beim allmählichen Auslassen des Mediums aus dem Messrohr 1 sinkt der Differenzdruck deltap von einem anfänglichen Wert von 80mbar (Millibar) allmählich auf 0mbar.

In einem mittleren Bereich des zeitlichen Verlaufs liegt eine Teilfüllung TF des Messrohrs 1 vor. Es ist deutlich erkennbar, dass sich die Teilfüllung TF in einer fast sprunghaften Änderung des Asymmetrie-Werts AW niederschlägt. Der Asymmetrie-Wert AW befindet sich anfangs im Wesentlichen bei dem Referenz-Wert RW von -2%, um sich anschließend in dem mittigen Bereich der Teilfüllung TF auf +6% zu ändern. Ist das Messrohr 1 wieder vollständig entleert, liegt der Asymmetrie-Wert AW wie anfänglich wieder in der Nähe des Referenz-Werts RW.

Die Untersuchungen der Anmelderin belegen zum einen, dass der Asymmetrie-Wert AW bzw. eine Abweichung des Asymmetrie-Wert AW vom Referenz-Wert RW ein verlässliches Maß für die Teilfüllung TF darstellt. Zum anderen wird der Einfluss der Teilfüllung TF auf den Differenzdruck deltap gezeigt. Aus diesem Grund wird in einer bevorzugten Ausgestaltung bei Detektion der Teilfüllung TF die Bestimmung der Durchflussgeschwindigkeit v auf Basis des Differenzdrucks deltap verworfen.

In Fig. 3b sind ähnliche Untersuchungen der Anmelderin dargestellt. Anders als in Fig. 3a handelt es sich hier um Untersuchungen an einer Messanordnung mit einem horizontal angeordneten Coriolis-Messgerät 8.

Das Coriolis-Messgerät 8 mit einem anfänglich leeren Messrohr 1 wird nun im Wesentlichen schrittweise mit Medium gefüllt - allerdings hier nur bis zur Teilfüllung TF. Dabei wird der in Fig. 3b gezeigte zeitliche Verlauf des Differenzdrucks deltap, des Asymmetrie-Werts AW und der Resonanzfrequenz fres aufgenommen. Es steigt der Differenzdruck deltap von einem anfänglichen Wert von Null schrittweise auf einen (oberer Graph, gepunktete Linie) Wert von 25 mbar. Der Asymmetrie-Wert AW sinkt dabei schrittweise in gleicher Weise von dem anfänglichen Referenz-Wert RW von AW=-2% (mittlerer Graph, gestrichelte Linie) auf den davon deutlich unterscheidbaren Wert von AW=-6%. Es ergibt sich also wie im schon in Fig. 3a gezeigten Fall eine Abweichung des Asymmetrie-Wert AW von dem Referenz-Wert RW von zumindest 4% bei der Teilfüllung TF. Auch in diesem Fall ist daher mittels des Asymmetrie-Werts AW die Teilfüllung TF verlässlich detektierbar. Gleichzeitig wird, zum Ausschluss von falsch-positiven Meldungen über die Teilfüllung TF, noch die Resonanzfrequenz fres als Schwingungsmessgröße Smess mit aufgenommen (unterer Graph, durchgezogene Linie). Wie deutlich erkennbar, ist die Resonanzfrequenz fres im Wesentlichen konstant. Mittels der zusätzlichen Überwachung der Resonanzfrequenz fres ist daher ist eine Änderung des Asymmetrie-Wert AW, welche nur bedingt durch eine Teilfüllung TF ist, unterscheidbar von einer Änderung des Asymmetrie-Wert AW aufgrund von z.B. Inhomogenitäten im Medium. Im letzteren Fall würde sich die Resonanzfrequenz fres gleichzeitig zu dem Asymmetrie-Wert AW ändern, bspw. sprunghaft um zumindest eine Größenordnung (d.h. zumindest einen Faktor 10). Somit ist mittels der in Schritt E aus Fig. 2 gezeigten Ausgestaltung des erfindungsgemäßen Verfahrens eine besonders robuste und sichere Detektion einer Teilfüllung TF eines Messrohrs 1 eines Coriolis-Messgeräts 8 ermöglicht.

### Bezugszeichen und Symbole

- 1: Messrohr
- 2: Erreger
- 3: Sensoranordnung
- 3a,3b: erster, zweiter Sensor
- 4: Betriebsschaltung
- 6: übergeordnete Einheit
- 7: Kommunikationsverbindung
- 8: Coriolis-Messgerät
- 10: Speichereinheit
- 11: Rohrleitung
- 11a, 11b: ein-, auslaufseitiger Abschnitt
- 12, 12a,12b: (Differenz)drucksensor

- AW: Asymmetrie-Wert
- RW: Referenzwert
- U1, U2: Messspannungen
- AU1,AU2: Amplituden
- TF: Teilfüllung
- Smess: Schwingungsmessgröße
- deltap: Differenzdruck
- deltap_min: minimaler Differenzdruck
- hydrop: hydrostatische Druck
- Phi: Massedurchfluss
- v: Durchflussgeschwindigkeit
- fres: Resonanzfrequenz
- Fill: Füllgrad
- IB: Initialisierungsbetrieb
- MB: Messbetrieb

## Patentansprüche

1. Verfahren zum Betreiben einer Messanordnung mit einem Coriolis-Messgerät (8), welches Coriolis-Messgerät (8) zum Erfassen eines Massedurchflusses und/oder einer Dichte und/oder einer Viskosität eines durch mindestens ein Messrohr (1) des Coriolis-Messgeräts (8) strömenden Mediums eingerichtet ist,
das Coriolis-Messgerät (8) umfassend:
- das mindestens eine Messrohr (1), welches zum Führen des Mediums eingerichtet ist, mit jeweils einem Einlauf (1a) zum Einströmen des Mediums und einem Auslauf (1b) zum Ausströmen des Mediums;
- mindestens einen Erreger (2), welcher dazu eingerichtet ist, das mindestens eine Messrohr (1) zu Messrohrschwingungen anzuregen;
- eine Sensoranordnung (3), welche dazu eingerichtet sind, die Messrohrschwingungen zu erfassen, mit einem einlaufseitigen ersten Sensor (3a) und einen auslaufseitigen zweiten Sensor (3b);
- eine Betriebsschaltung (4), welche dazu eingerichtet ist, den zumindest einen Erreger (3) zu betreiben, an dem ersten Sensor und dem zweiten Sensor jeweils induzierte elektrische Messspannungen (U1,U2) zu erfassen, und anhand der erfassten Messspannungen (U1,U2) einen den Massedurchflusses und/oder die Dichte und/oder die Viskosität repräsentierenden Messwert zu ermitteln,
wobei das Verfahren die folgenden Schritte umfasst:
- Aufnehmen der ersten Messspannung (U1) und der zweiten (U2) Messspannung, sowie Erstellen eines Asymmetrie-Werts (AW) als Maß für eine Asymmetrie zwischen dem ersten Sensor (3a) und dem zweiten Sensor (3b), insb. zwischen einer Amplitude (AU1) der ersten Messspannung (U1) und einer Amplitude (AU2) der zweiten Messspannung (U2);
- Auslesen eines hinterlegten Referenz-Wertes (RW) für den Asymmetrie-Wert (AW),
- Vergleich des erstellten Asymmetrie-Wertes (AW) mit dem hinterlegten Referenz-Wert (RW),
- wobei der Asymmetrie-Wert während des Messbetriebs wiederkehrend erstellt und mit dem Referenz-Wert verglichen wird,
**gekennzeichnet durch**
- Wiederkehrendes Erfassen einer von der Amplitude (AU1; AU2) der Messspannung verschiedenen Schwingungsmessgröße (Smess; fres) der Messrohrschwingungen, nämlich einer Resonanzfrequenz (fres), einer Phasenverschiebung und/oder einer Abklingrate der Messrohrschwingungen;
- Detektion einer bei einer Asymmetrie zwischen dem ersten Sensor (3a) und dem zweiten Sensor (3b) vorliegenden Teilfüllung (TF) des Messrohrs (1) mit einem im Messrohr (1) stehenden Medium, für den Fall, dass zumindest eine Asymmetrie-Wertfolge (AW1,AW2,,...) von wiederkehrend erfassten Asymmetrie-Werten (AW) um mindestens einen vorgegeben Grenzwert von dem Referenz-Wert (RW) abweicht, und die Schwingungsmessgröße (Smess; fres) oder eine daraus abgeleitete Messgröße im Wesentlichen konstant ist oder um maximal einen vorgegebenen Betrag um einen konstanten Wert schwankt.

2. Verfahren nach Anspruch 1, umfassend den Schritt
Detektion einer bei einer Asymmetrie zwischen dem ersten Sensor (3a) und dem zweiten Sensor (3b) vorliegenden Teilfüllung (TF) des Messrohrs (1) mit einem im Messrohr (1) stehenden Medium,
für den Fall, dass zumindest der Asymmetrie-Wert (AW) um mindestens einen vorgegebenen Grenzwert (GW), von dem Referenz-Wert (RW) abweicht.

3. Verfahren nach zumindest einem der vorherigen Ansprüche,
wobei der Referenz-Wert (RW) für den Asymmetrie-Wert (AW) im Rahmen eines Initialisierungsbetriebs (IB) des in einer Rohrleitung (11) einer Prozessanlage eingebauten Coriolis-Messgeräts (8) erstellt oder zumindest angepasst wird.

4. Verfahren nach zumindest einem der vorherigen Ansprüche,
wobei die Messanordnung umfasst:
- eine Rohrleitung (11), mit der das Coriolis-Messgerät (8) derart verbunden ist, dass mit dem Coriolis-Messgerät (8) der Massedurchfluss eines durch die Rohrleitung strömenden Mediums bestimmbar ist;
- einen ersten Drucksensor (12a), welcher in oder an einem einlaufseitigen Abschnitt der Rohrleitung angebracht ist und einen zweiten Drucksensor (12b), welcher in oder an einem auslaufseitigen Abschnitt der Rohrleitung angebracht ist und/oder ein Differenzdrucksensor (12), welcher dazu eingerichtet ist, einen Druckunterschied zwischen einem einlaufseitigen Abschnitt der Rohrleitung (11a) und einem auslaufseitigen Abschnitt (11b) der Rohrleitung (12) zu erfassen;
und wobei das Verfahren umfasst:
- Messen eines bei einem Druckunterschied zwischen dem einlaufseitigen Abschnitt (11a) der Rohrleitung (11) und dem auslaufseitigen Abschnitt der Rohrleitung vorliegenden Differenzdrucks (deltap) mittels des ersten Drucksensors (12a) und des zweiten Drucksensors (12b) und/oder des Differenzdrucksensors (12);
- Bestimmen einer Durchflussgeschwindigkeit (v) des Mediums durch die Rohrleitung (11) auf Basis der Differenzdruckmessung;
- Verwerfen der bestimmten Durchflussgeschwindigkeit (v) per Differenzdruckmessung, für den Fall, dass eine Teilfüllung (TF) des Messrohrs (1) mit einem im Messrohr (1) stehenden Medium detektiert wird.

5. Verfahren nach Anspruch 4,
umfassend den Schritt:
- Vorgabe eines minimalen Differenzdrucks (deltap_min);
- Verwerfen der bestimmten Durchflussgeschwindigkeit (v) per Differenzdruckmessung, falls der gemessene Differenzdruck (deltap) kleiner als der minimale Differenzdruck (deltap_min) ist;
wobei der minimale Differenzdruck (deltap_min) derart gewählt ist, dass er maximal 2/3, insb. maximal 1/2, mal so groß ist im Vergleich zu einem hydrostatischen Druck (hydrop), welcher hydrostatische Druck (hydrop) bei einer vollständigen Füllung des Messrohrs (1) mit einem Medium vorliegt.

6. Verfahren nach zumindest einem der vorherigen Ansprüche,
umfassend den Schritt:
- Verwerfen eines mit dem Coriolis-Messgerät (8) ermittelten Messwerts (Phi) für den Massedurchfluss für den Fall, dass eine Teilfüllung (TF) des Messrohrs (1) detektiert wird.

7. Verfahren nach zumindest einem der vorherigen Ansprüche,
umfassend den Schritt:
- Ausgabe eines Messwerts von Null für den Massedurchfluss für den Fall, dass eine Teilfüllung (TF) des Messrohrs (1) detektiert wird.

8. Messanordnung mit
einem Coriolis-Messgerät (8), welches Coriolis-Messgerät (8) zum Erfassen eines Massedurchflusses und/oder einer Dichte und/oder einer Viskosität eines durch mindestens ein Messrohr (1) des Coriolis-Messgeräts (8) strömenden Mediums eingerichtet ist, das Coriolis-Messgerät (8) umfassend:
- das mindestens eine Messrohr (1), welches zum Führen des Mediums eingerichtet ist, mit jeweils einem Einlauf (1a) zum Einströmen des Mediums und einem Auslauf (1b) zum Ausströmen des Mediums;
- mindestens einen Erreger (2), welcher dazu eingerichtet ist, das mindestens eine Messrohr (1) zu Messrohrschwingungen anzuregen;
- eine Sensoranordnung (3), welche dazu eingerichtet sind, die Messrohrschwingungen zu erfassen, mit einem einlaufseitigen ersten Sensor (3a) und einen auslaufseitigen zweiten Sensor (3b);
- eine Betriebsschaltung (4), welche dazu eingerichtet ist, den zumindest einen Erreger (2) zu betreiben, an dem ersten Sensor (3a) und dem zweiten Sensor (3b) jeweils induzierte elektrische Messspannungen (U1;U2) zu erfassen, und anhand der erfassten Messspannungen (U1;U2) einen den Massedurchflusses und/oder die Dichte und/oder die Viskosität repräsentierenden Messwert zu ermitteln,
wobei die Messanordnung dazu ausgestaltet ist, das Verfahren nach zumindest einem der Ansprüche 1 bis 7 durchzuführen.

9. Messanordnung nach Anspruch 8,
umfassend eine übergeordnete Einheit (6), an die das Coriolis-Messgerät (8) mittels einer Kommunikationsverbindung (7) angeschlossen ist.

## Claims

1. A method for operating a measurement arrangement with a Coriolis measuring device (8), said Coriolis measuring device (8) being configured to detect a mass flow and/or a density, and/or a viscosity of a medium flowing through at least one measuring tube (1) of the Coriolis measuring device (8), the Coriolis measuring device (8) comprising:
- The at least one measuring tube (1) which is configured to conduct the medium, each with one inlet (1a) for letting the medium flow in and one outlet (1b) for letting the medium flow out;
- at least one exciter (2) which is configured to cause measuring tube oscillations of the at least one measuring tube (1);
- a sensor arrangement (3) which is configured to detect the measuring tube oscillations, with an inlet-side first sensor (3a) and an outlet-side second sensor (3b);
- an operating circuit (4) which is configured to operate the at least one exciter (3), to detect electrical measuring voltages (U1, U2) induced both at the first sensor and the second sensor, and to determine a measured value representing the mass flow and/or the density, and/or the viscosity based on the detected measuring voltages (U1, U2),
wherein the method comprises the following steps:
- Recording the first measuring voltage (U1) and the second measuring voltage (U2), as well as creating an asymmetry value (AW) as a measure of an asymmetry between the first sensor (3a) and the second sensor (3b), in particular between an amplitude (AU1) of the first measuring voltage (U1) and an amplitude (AU2) of second measuring voltage (U2);
- reading out a saved reference value (RW) for the asymmetry value (AW),
- comparing the created asymmetry value (AW) to the saved reference value (RW),
- wherein the asymmetry value is created on a recurrent basis during measuring mode and compared to the reference value, **characterized by**
- detecting, on a recurrent basis, an oscillation measured variable (Smess; fres) of the measuring tube oscillations which differs from the amplitude (AU1; AU2) of the measuring voltage, that is to say a resonant frequency (fres), a phase shift, and/or an attenuation rate of the measuring tube oscillations;
- detecting a partial filling (TF) of the measuring tube (1) with a medium in the measuring tube (1) present in the event of an asymmetry between the first sensor (3a) and the second sensor (3b), for the case that at least one asymmetry value sequence (AW1, AW2, etc.) of recurrently detected asymmetry values (AW) differs from the reference value (RW) by at least one specified limit value (GW), and the oscillation measured variable (Smess; fres) or a measured variable derived therefrom is mostly constant, or fluctuates around a constant value by a specified amount at most.

2. The method as claimed in claim 1, comprising the step:
Detecting a partial filling (TF) of the measuring tube (1) with a medium in the measuring tube (1) present in the event of an asymmetry between the first sensor (3a) and the second sensor (3b), for the case that at least the asymmetry value (AW) differs from the reference value (RW) by at least one specified limit value (GW).

3. The method as claimed in at least one of the preceding claims,
wherein the reference value (RW) for the asymmetry value (AW) is created or at least adjusted during initialization mode (IB) of the Coriolis measuring device (8) installed in a pipeline (11) of a processing system.

4. The method as claimed in at least one of the preceding claims,
wherein the measurement arrangement comprises:
- A pipeline (11) to which the Coriolis measuring device (8) is connected in such a way that the Coriolis measuring device (8) can be used to determine the mass flow of a medium flowing through the pipeline;
- a first pressure sensor (12a) which is fitted in or on an inlet-side section of the pipeline and a second pressure sensor (12b) which fitted in or on an outlet-side section of the pipeline;
- and/or a differential pressure sensor (12) which is configured to detect a pressure difference between an inlet-side section of the pipeline (11a) and an outlet-side section (11b) of the pipeline (12);
and wherein the method comprises:
- Measuring a differential pressure (deltap) present in the event of a pressure difference between the inlet-side section (11a) of the pipeline (11) and the outlet-side section of the pipeline using the first pressure sensor (12a) and the second pressure sensor (12b), and/or the differential pressure sensor (12);
- determining a flow velocity (v) of the medium through the pipeline (11) based on the differential pressure measurement;
- dismissing the flow velocity (v) determined by means of differential pressure measurement, for the case that a partial filling (TF) of the measuring tube (1) with a medium in the measuring tube (1) is detected.

5. The method as claimed in claim 4, comprising the step:
- Specifying a minimum differential pressure (deltap_min);
- dismissing the established flow velocity (v) by means of differential pressure measurement if the measured differential pressure (deltap) is less than the minimum differential pressure (deltap_min);
wherein the minimum differential pressure (deltap_min) is selected in such a way that it is at most 2/3, in particular at most 1/2, of a hydrostatic pressure (hydrop), said hydrostatic pressure (hydrop) being present when the measuring tube (1) is completely filled with a medium.

6. The method as claimed in at least one of the preceding claims, comprising the step:
- Dismissing a measured value (Phi) for the mass flow determined using the Coriolis measuring device (8) for the case that a partial filling (TF) of the measuring tube (1) is detected.

7. The method as claimed in at least one of the preceding claims, comprising the step:
- Specifying a measured value of zero for the mass flow for the case that a partial filling (TF) of the measuring tube (1) is detected.

8. A measurement arrangement with a Coriolis measuring device (8), said Coriolis measuring device (8) being configured to detect a mass flow and/or a density, and/or a viscosity of a medium flowing through at least one measuring tube (1) of the Coriolis measuring device (8), the Coriolis measuring device (8) comprising:
- The at least one measuring tube (1) which is configured to conduct the medium, each with one inlet (1a) for letting the medium flow in and one outlet (1b) for letting the medium flow out;
- at least one exciter (2) which is configured to cause measuring tube oscillations of the at least one measuring tube (1);
- a sensor arrangement (3) which is configured to detect the measuring tube oscillations, with an inlet-side first sensor (3a) and an outlet-side second sensor (3b);
- an operating circuit (4) which is configured to operate the at least one exciter (2), to detect electrical measuring voltages (U1; U2) induced both at the first sensor (3a) and the second sensor (3b), and to determine a measured value
- representing the mass flow and/or the density, and/or the viscosity based on the detected measuring voltages (U1; U2),
wherein the measurement arrangement is configured to carry out the method as claimed in at least one of claims 1 to 7.

9. The measurement arrangement as claimed in claim 8,
comprising a higher-level unit (6) to which the Coriolis measuring device (8) is connected by means of a communication connection (7).

## Revendications

1. Procédé destiné à l'exploitation d'un dispositif de mesure avec un débitmètre Coriolis (8), lequel débitmètre Coriolis (8) est conçu pour mesurer un débit massique et/ou une densité et/ou une viscosité d'un produit s'écoulant à travers au moins un tube de mesure (1 ) du débitmètre Coriolis (8), lequel débitmètre (8) comprend :
- l'au moins un tube de mesure (1), lequel est conçu pour guider le produit, avec respectivement une entrée (1a) pour l'écoulement entrant du produit et une sortie (1b) pour l'écoulement sortant du produit ;
- au moins un excitateur (2), lequel est conçu pour exciter l'au moins un tube de mesure (1 ) en vibrations de tube de mesure ;
- un agencement de capteurs (3), lesquels sont conçus pour mesurer les vibrations de tube de mesure, avec un premier capteur (3a) côté entrée et un deuxième capteur (3b) côté sortie ;
- un circuit de fonctionnement (4), lequel est conçu pour faire fonctionner l'au moins un excitateur (2), pour relever des tensions de mesure électriques (U1, U2) induites respectivement sur le premier capteur et sur le deuxième capteur, et pour déterminer, à l'aide des tensions de mesure (U1, U2) relevées, une valeur mesurée représentant le débit massique et/ou la densité et/ou la viscosité,
lequel procédé comprend les étapes suivantes :
- Enregistrement de la première tension de mesure (U1) et de la deuxième tension de mesure (U2), et établissement d'une valeur d'asymétrie (AW) en tant que mesure d'une asymétrie entre le premier capteur (3a) et le deuxième capteur (3b), notamment entre une amplitude (AU1) de la première tension de mesure (U1) et une amplitude (AU2) de la deuxième tension de mesure (U2) ;
- Lecture d'une valeur de référence (RW) mémorisée pour la valeur d'asymétrie (AW),
- Comparaison de la valeur d'asymétrie (AW) établie avec la valeur de référence (RW) mémorisée,
- la valeur d'asymétrie étant établie de manière répétée pendant le mode de mesure et comparée à la valeur de référence,
**caractérisé par** les étapes suivantes :
- Relevé répété d'une grandeur de mesure de vibration (Smess ; fres) des vibrations du tube de mesure, laquelle grandeur est différente de l'amplitude (AU1, AU2) de la tension de mesure, à savoir une fréquence de résonance (fres), un déphasage et/ou un taux de décroissance des vibrations du tube de mesure ;
- Détection d'un remplissage partiel (TF) du tube de mesure (1), présent en cas d'asymétrie entre le premier capteur (3a) et le deuxième capteur (3b), avec un produit se trouvant dans le tube de mesure (1), dans le cas où au moins une suite de valeurs d'asymétrie (AW1, AW2, ...) de valeurs d'asymétrie (AW) relevées de manière récurrente s'écarte de la valeur de référence (RW) d'au moins une valeur limite prédéfinie, et la grandeur de mesure de vibration (Smess ; fres) ou une grandeur de mesure qui en est dérivée est pour l'essentiel constante ou varie au maximum d'une valeur constante prédéfinie.

2. Procédé selon la revendication 1, lequel procédé comprend l'étape suivante :
Détection d'un remplissage partiel (TF) du tube de mesure (1), lequel remplissage partiel est présent en cas d'asymétrie entre le premier capteur (3a) et le deuxième capteur (3b), avec un produit se trouvant dans le tube de mesure (1), dans le cas où au moins la valeur d'asymétrie (AW) s'écarte de la valeur de référence (RW) d'au moins une valeur limite prédéfinie (GW).

3. Procédé selon au moins l'une des revendications précédentes,
pour lequel la valeur de référence (RW) pour la valeur d'asymétrie (AW) est établie ou au moins adaptée dans le cadre d'une opération d'initialisation (IB) du débitmètre Coriolis (8) monté dans une conduite (11) d'une installation de process.

4. Procédé selon au moins l'une des revendications précédentes,
le dispositif de mesure comprenant :
- une conduite (11) à laquelle le débitmètre Coriolis (8) est relié de telle sorte que le débit massique d'un produit s'écoulant à travers la conduite peut être déterminé avec le débitmètre Coriolis (8) ;
- un premier capteur de pression (12a), lequel est monté dans ou sur une section côté entrée de la conduite et un deuxième capteur de pression (12b), lequel est monté dans ou sur une section côté sortie de la conduite et/ou un capteur de pression différentielle (12), lequel est conçu pour mesurer une différence de pression entre une section côté entrée de la conduite (11a) et une section côté sortie (11b) de la conduite (12) ;
et lequel procédé comprenant les étapes suivantes :
- Mesure d'une pression différentielle (deltap) présente à une différence de pression entre la section côté entrée (11a) de la conduite (11) et la section côté sortie de la conduite au moyen du premier capteur de pression (12a) et du deuxième capteur de pression (12b) et/ou du capteur de pression différentielle (12) ;
- Détermination d'une vitesse d'écoulement (v) du produit à travers la conduite (11) sur la base de la mesure de pression différentielle ;
- Rejet de la vitesse d'écoulement (v) déterminée par mesure de pression différentielle, dans le cas où un remplissage partiel (TF) du tube de mesure (1) avec un produit se trouvant dans le tube de mesure (1) est détecté.

5. Procédé selon la revendication 4,
lequel procédé comprend les étapes suivantes :
- Spécification d'une pression différentielle minimale (deltap_min) ;
- Rejet de la vitesse d'écoulement déterminée (v) par mesure de pression différentielle, dans le cas où la pression différentielle mesurée (deltap) est inférieure à la pression différentielle minimale (deltap_min) ;
la pression différentielle minimale (deltap_min) étant choisie de telle sorte qu'elle soit au maximum 2/3, notamment au maximum 1/2 fois plus grande par rapport à une pression hydrostatique (hydrop), laquelle pression hydrostatique (hydrop) est présente lorsque le tube de mesure (1) est entièrement rempli d'un produit.

6. Procédé selon au moins l'une des revendications précédentes,
lequel procédé comprend l'étape suivante :
- Rejet d'une valeur mesurée (Phi) déterminée par le débitmètre Coriolis (8) pour le débit massique dans le cas où un remplissage partiel (TF) du tube de mesure (1) est détecté.

7. Procédé selon au moins l'une des revendications précédentes,
lequel procédé comprend l'étape suivante :
- Émission d'une valeur mesurée nulle pour le débit massique dans le cas où un remplissage partiel (TF) du tube de mesure (1) est détecté.

8. Dispositif de mesure avec
un débitmètre Coriolis (8), lequel débitmètre Coriolis (8) est conçu pour mesurer un débit massique et/ou une densité et/ou une viscosité d'un produit s'écoulant à travers au moins un tube de mesure (1) du débitmètre Coriolis (8), lequel débitmètre Coriolis (8) comprend :
- l'au moins un tube de mesure (1), lequel est conçu pour guider le produit, avec respectivement une entrée (1a) pour l'écoulement entrant du produit et une sortie (1b) pour l'écoulement sortant du produit ;
- au moins un excitateur (2), lequel est conçu pour exciter l'au moins un tube de mesure (1 ) en vibrations de tube de mesure ;
- un agencement de capteurs (3), lesquels sont conçus pour mesurer les vibrations de tube de mesure, avec un premier capteur (3a) côté entrée et un deuxième capteur (3b) côté sortie ;
- un circuit de fonctionnement (4), lequel est conçu pour faire fonctionner l'au moins un excitateur (2), pour relever des tensions de mesure électriques (U1, U2) induites respectivement sur le premier capteur (3a) et sur le deuxième capteur (3b), et pour déterminer, à l'aide des tensions de mesure (U1, U2) relevées, une valeur mesurée représentant le débit massique et/ou la densité et/ou la viscosité, le dispositif de mesure étant conçu pour exécuter le procédé selon au moins l'une des revendications 1 à 7.

9. Dispositif de mesure selon la revendication 8,
lequel dispositif comprend une unité supérieure (6) à laquelle le débitmètre Coriolis (8) est raccordé au moyen d'une liaison de communication (7).
